# FASCICULE DE BREVET EUROPEEN

(11) **EP 2 794 326 B1**
(45) Date de publication et mention de la délivrance du brevet: **18.11.2015**
(21) Numéro de dépôt: 12806468.0
(22) Date de dépôt: 20.12.2012
(51) Int. Cl.: B60K 17/14, B60K 7/00, B62D 7/18, F16L 27/087

(54) **SUPPORT DE ROUE MUNI DE CONDUITS D'ALIMENTATION D'UN APPAREIL HYDRAULIQUE**
RADTRÄGER MIT ROHREN ZUR VERSORGUNG EINER HYDRAULISCHEN VORRICHTUNG
WHEEL SUPPORT PROVIDED WITH PIPES FOR SUPPLYING A HYDRAULIC DEVICE

(30) Priorité: 21.12.2011 FR 1162206; 06.04.2012 FR 1201051
(43) Date de publication de la demande: 29.10.2014
(73) Titulaire: Poclain Hydraulics Industrie, 60410 Verberie (FR)
(72) Inventeur: VIDAL, Stéphane, F-60410 Verberie (FR); BONNOMET, Bertrand, F-60410 Verberie (FR); MULOT, Jérémie, F-60410 Verberie (FR); ALBERT, Laurent, F-60410 Verberie (FR)
(74) Mandataire: Regimbeau
(86) Numéro de dépôt international: PCT/EP2012/076322
(87) Numéro de publication internationale: WO 2013/092825

(56) Documents cités:
- DE-A1- 1 455 695
- FR-A1- 2 693 154
- FR-A3- 2 688 175

## Description

### DOMAINE TECHNIQUE GENERAL

La présente invention concerne le domaine des véhicules munis de moteurs hydrauliques montés sur leurs roues afin d'en assurer l'entrainement.

### ETAT DE L'ART

Les véhicules et engins munis de moteurs hydrauliques montés directement sur les fusées de roues afin de les entrainer individuellement sont communément utilisés, par exemple pour des applications avec des charges importantes ou pour des conditions d'utilisations très variables. La connexion de tels moteurs à une source de débit ou de pression ; par exemple une pompe hydraulique ou des accumulateurs est délicate à réaliser, en ce qu'elle nécessite de disposer des conduits s'étendant sur une longueur importante du véhicule, et est d'autant plus délicate lorsqu'il s'agit de roues directrices.

On connait du document FR2693154 au nom de la demanderesse une solution pour réaliser de telles connexions, en réalisant un joint tournant auquel sont directement reliés les conduits d'alimentation du moteur hydraulique.

Toutefois, cette solution est contraignante à mettre en oeuvre, notamment en ce qui concerne les branchements de conduits flexibles à proximité de la roue et du frein, et en termes d'encombrement.

DE 14 55695 décrit un essieu selon le préambule de la revendication 1.

### PRESENTATION DE L'INVENTION

La présente invention vise à proposer un système ne présentant pas de tels inconvénients.

A cet effet, l'invention propose un ensemble, comprenant
- un essieu,
- un pivot de direction monté sur l'essieu,
- une fusée de roue montée sur le pivot,
- un moteur hydraulique et une roue montés sur ladite fusée,
de sorte que la fusée soit montée pivotant par rapport à l'essieu, l'essieu, la fusée et le pivot étant munis de conduits hydrauliques communicants pour alimenter le moteur hydraulique en fluide, les conduits hydrauliques étant aménagés dans l'essieu, le pivot et la fusée de manière à ce que le pivot réalise un joint tournant assurant la connexion fluidique desdits conduits aménagés dans l'essieu, le pivot et la fusée lors du pivotement de la fusée par rapport à l'essieu,
caractérisé en ce que le pivot comprend un élément d'axe emmanché dans l'essieu et dans lequel sont aménagés lesdits conduits hydrauliques, la fusée étant montée pivotant sur l'élément d'axe, l'essieu et la fusée comprenant chacun des gorges s'étendant autour dudit élément d'axe et reliées respectivement aux conduits hydrauliques de l'essieu et de la fusée de manière à réaliser ainsi le joint tournant avec les conduits hydrauliques du pivot.

Selon un mode de réalisation particulier, les conduits aménagés dans l'essieu correspondent à une ligne haute pression et une ligne basse pression reliées au moteur hydraulique, chaque essieu et fusée comprenant ainsi deux gorges pour former une connexion fluidique entre lesdits conduits formant les lignes haute et basse pression de l'essieu, du pivot et de la fusée.
L'essieu et la fusée comprennent alors typiquement en outre en outre deux gorges de fuite disposées de part et d'autre desdites gorges, lesdites gorges de fuite étant reliées à une ligne de drain débouchant dans un réservoir à pression ambiante et/ou à une ligne de pression de carter du moteur hydraulique, et étant adaptées pour recueillir les fuites provenant du joint tournant.

Selon un autre mode de réalisation particulier, lesdits conduits sont chacun encadrés par des gorges d'étanchéité munies d'éléments d'étanchéité haute pression ou basse pression.

Selon un autre mode de réalisation particulier, le pivot comprend un élément d'axe emmanché dans l'essieu et dans lequel sont aménagés lesdits conduits hydrauliques, ledit élément d'axe comprenant des gorges périphériques reliées aux conduits aménagés dans cet élément d'axe, de sorte que ces gorges soient en communication fluidique avec les conduits aménagés dans l'essieu et dans la fusée.
Ledit pivot est alors typiquement muni d'au moins deux zones palières mécaniques le reliant à l'essieu, chacune desdites zones palières mécaniques étant encadrée par des éléments d'étanchéité comprenant des gorges aménagées dans ledit pivot ou dans ledit essieu dans lesquelles sont disposés des joints d'étanchéité.
Au moins une desdites zones palières est alors typiquement lubrifiée au moyen d'huile hydraulique, ladite zone palière étant reliée au moyen d'une ligne de fuite à un conduit hydraulique aménagé dans l'essieu, la fusée ou le pivot de manière à assurer l'alimentation en huile hydraulique de ladite zone palière.

Selon un mode de réalisation particulier, lesdits conduits aménagés dans l'essieu débouchent dudit essieu sur des surfaces comprenant des moyens de fixation de flexibles afin de les relier auxdits conduits aménagés dans l'essieu.

Selon un mode de réalisation particulier, ledit ensemble comprend en outre une chape fixée sur ladite fusée de roue et montée tournante autour dudit pivot, ladite chape comprenant des conduits adaptés pour permettre une connexion fluidique entre les conduits aménagés dans le pivot et dans la fusée.
Ledit pivot est alors typiquement muni d'au moins deux zones palières mécaniques le reliant à la chape, chacune desdites zones palières mécaniques étant encadrée par des éléments d'étanchéité comprenant des gorges aménagées dans ledit pivot ou dans ladite chape dans lesquelles sont disposés des joints d'étanchéité.

Selon un mode de réalisation particulier, le pivot est monté fixe sur la fusée de sorte que le système formé par le pivot et la fusée soit monté pivotant par rapport à l'essieu.

L'invention concerne également un véhicule comprenant une roue directrice montée sur un ensemble tel que défini précédemment, ainsi que des moyens d'alimentation des moteurs hydraulique en fluide hydraulique, la connexion fluidique entre lesdits moyens d'alimentation et lesdits moteurs étant réalisée au moyen des conduits aménagés dans lesdits essieu, pivot et fusée.

### PRESENTATION DES FIGURES

D'autres caractéristiques, buts et avantages de l'invention ressortiront de la description qui suit, qui est purement illustrative et non limitative, et qui doit être lue en regard des dessins annexés, sur lesquels :
- la figure 1 présente une vue d'un ensemble selon un aspect de l'invention,
- les figures 2, 3 et 4 présentent des vues en coupe de l'ensemble présenté sur la figure 1,
- la figure 5 présente une vue en coupe d'un autre mode de réalisation d'un ensemble selon un aspect de l'invention,
- les figures 6 à 9 présentent plusieurs vues d'une autre variante d'un ensemble selon un aspect de l'invention,
- la figure 10 présente une vue d'un ensemble selon un aspect de l'invention,
- les figures 11 à 23 présentent plusieurs modes de réalisation d'éléments d'étanchéité pouvant être utilisés pour réaliser l'étanchéité notamment des différents conduits présentés sur les figures précédentes.

Sur l'ensemble des figures, on repère par des références numériques communes les éléments identiques ou équivalents.

### DESCRIPTION DETAILLEE

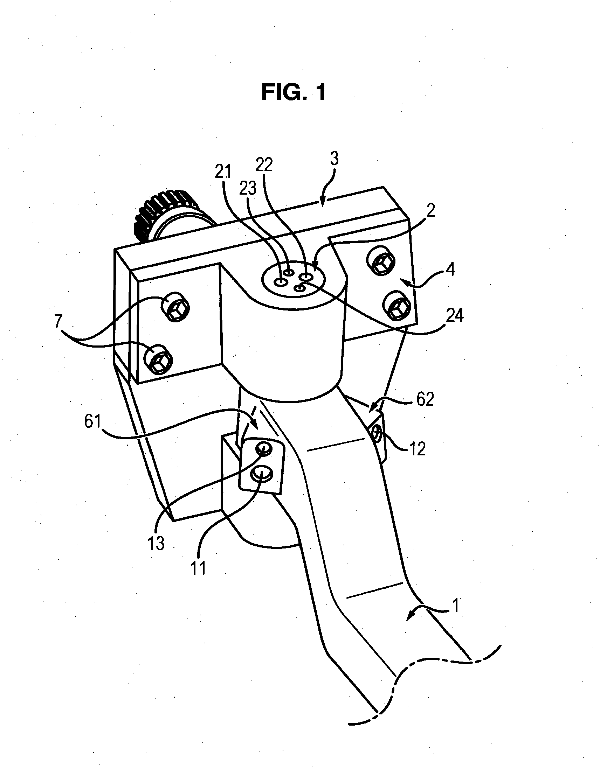

La figure 1 présente une vue d'un ensemble selon un aspect de l'invention.
On distingue sur cette figure :
- un essieu 1,
- un pivot 2 de direction,
- une fusée 3 de roue, montée autour dudit pivot 2, et adaptée pour recevoir une roue ainsi qu'un moteur hydraulique pouvant réaliser l'entrainement en rotation de ladite roue autour d'un axe défini par la fusée.
L'ensemble formé par l'essieu 1, le pivot 2 et la fusée 3 permet une rotation de la fusée 3, et ainsi la rotation d'un moteur et d'une roue montés sur la fusée 3 par rapport à l'essieu 1.
Le pivot 2 est ici formé d'un élément d'axe définissant un axe longitudinal de rotation, monté fixe dans un logement cylindrique aménage à une extrémité de l'essieu 1, sur lequel est montée tournante la fusée 3, étant ainsi libre en rotation autour de l'axe longitudinal dudit élément d'axe, et donc plus généralement du pivot 2.

Dans le mode de réalisation représenté, la fusée 3 est associée à une chape 4, fixée sur la fusée 3 de roue et montée tournante autour du pivot 2. La chape 4 présente par exemple une forme composée généralement d'une portion cylindrique associée à une portion plane via laquelle elle est fixée sur la fusée 3 au moyen d'une pluralité de boulons 7 ; cette portion plane de la chape 4 étant appuyée contre une portion plane de la fusée 3 définissant ainsi une surface de contact importante entre ces deux pièces afin d'en améliorer le maintien.
La chape 4 comprend typiquement des logements adaptés pour être associés à des moyens de pilotage de la rotation de la fusée 3 autour de l'essieu 1.

Plus précisément, la fusée 3 et la chape 4 présentent chacune un logement cylindrique, adapté pour permettre de les emmancher sur ledit élément d'axe du pivot 2. Ces logements cylindriques sont disposés de part et d'autre du logement cylindrique aménagé dans l'essieu 1, ce qui a pour effet d'assurer le maintien de l'ensemble formé par la fusée 3 et la chape 4 sur l'ensemble formé par l'essieu 1 et le pivot 2.

On peut envisager plusieurs variantes, selon que le pivot 2 est monté fixe par rapport à la fusée 3 et à la chape 4, ou par rapport à l'essieu 1. De manière générale, la rotation du pivot 2 par rapport à la fusée 3 et à la chape 4, ou par rapport à l'essieu 1 est réalisée au moyen de paliers, par exemple des roulements ou des coussinets assurant la liaison entre le pivot 2 et le ou les logements cylindriques 4 de l'essieu 1, de la fusée 3 et le cas échéant de la chape 4 dans lequel il est disposé.
Dans le cas où le pivot est en une unique partie, il comprend alors au moins deux zones palières, typiquement des cages à aiguilles, des butées à billes ou des paliers lisses.
Dans le cas où le pivot est composé de plusieurs segments, chacun de ces segments comprend alors au moins un palier afin de les relier à l'essieu, à la chape ou à la fusée, et un palier supplémentaire les reliant soit à l'essieu, à la chape ou à la fusée, soit à un autre segment formant le pivot. La lubrification de ces zones formant un palier mécanique peut alors être réalisée soit par de l'huile, soit par de la graisse ce qui permet d'obtenir une durée de vie supérieure. On peut avoir des lubrifications mixtes pour les zones palières d'un même pivot ; par exemple une zone palière lubrifiée à l'huile, et une autre zone palière du même pivot lubrifiée à la graisse.

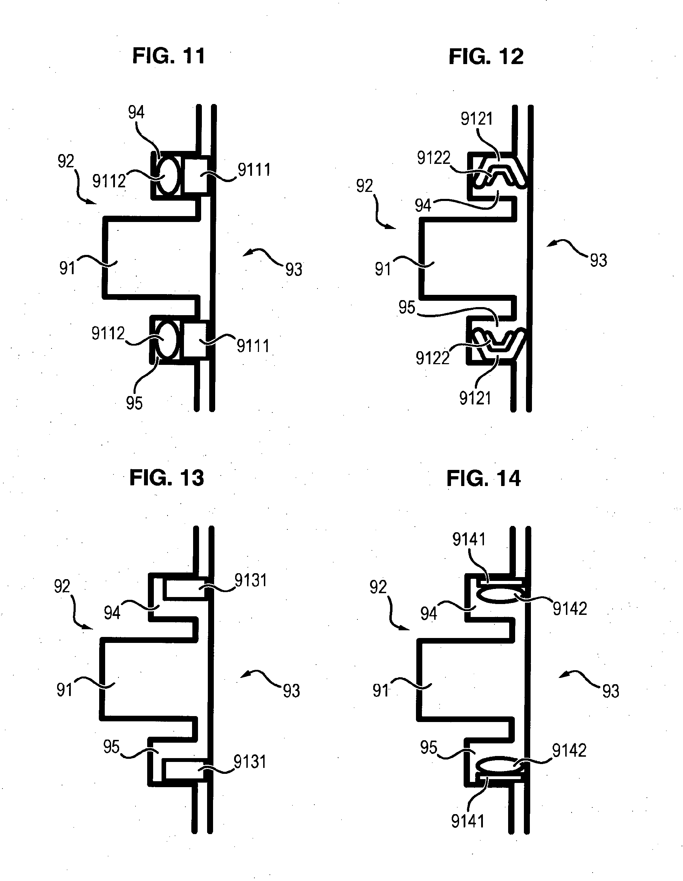

Dans le cas où les zones palières sont lubrifiées par de l'huile hydraulique, avantageusement de l'huile hydraulique à basse pression, ces zones palières sont encadrées par des gorges d'étanchéité munies d'éléments d'étanchéité, typiquement des éléments d'étanchéité tels qu'on le décrira ultérieurement en référence aux figures 11 à 23.
Par encadrées, on entend que la zone palière est soit directement encadrée par deux gorges d'étanchéité munies d'éléments d'étanchéité, soit qu'un ensemble formé de la zone palière et d'un ou plusieurs autres conduits est directement encadrée par deux gorges d'étanchéité munies d'éléments d'étanchéité.
La lubrification par de l'huile hydraulique peut notamment être utilisée en prélevant de l'huile sur un conduit de circulation de l'huile, par exemple le conduit formant le refoulement de l'appareil hydraulique considéré, étant alors entendu que l'élément d'étanchéité est adapté à supporter des pressions adéquates.

En montant un moteur hydraulique (non représenté sur les figures) sur la fusée 3, il est nécessaire d'y acheminer des lignes d'alimentation en fluide, typiquement en provenance d'une pompe hydraulique ou d'accumulateurs.
Plus précisément, un moteur hydraulique ainsi disposé sur la fusée 3 doit être relié à une ligne haute pression, une ligne basse pression, une ligne de pression de carter et le cas échéant une ligne de drain , la ligne de drain permettant de récupérer les fuites du système d'étanchéité tandis que la ligne de pression de carter permet de récupérer les fuites en provenance du carter du moteur dans lequel on peut observer des pointes de pression.
La ligne de drain n'est pas nécessaire dans le cas particulier de certains types de moteurs ; typiquement des moteurs décrabotables avec ressorts de rappel.

Afin de permettre de telles connexions, l'essieu 1 est muni de conduits internes 11, 12, 13 et 14 ici débouchant sur des protrusions 61 et 62 disposées sur deux faces opposées de l'essieu 1 et constituant des formes faisant saillie de l'essieu 1 définissant des surfaces d'appui, adaptées pour être reliés à des lignes haute et basse pression et des drains, qui sont connectées à l'admission et au refoulement du moteur hydraulique. Dans le mode de réalisation représenté, deux conduits débouchent de chacune des protrusions 61 et 62, respectivement les conduits 11 et 13 sur la protrusion 61, et les conduits 12 et 14 sur la protrusion 62. Des moyens de fixation adaptés sont prévus afin de permettre la fixation de lignes d'alimentation à ces conduits.

On comprend bien que les dénominations « haute pression » et « basse pression » sont relatives ; la ligne haute pression HP est une ligne dans laquelle la pression est plus élevée que la pression dans la ligne basse pression BP.

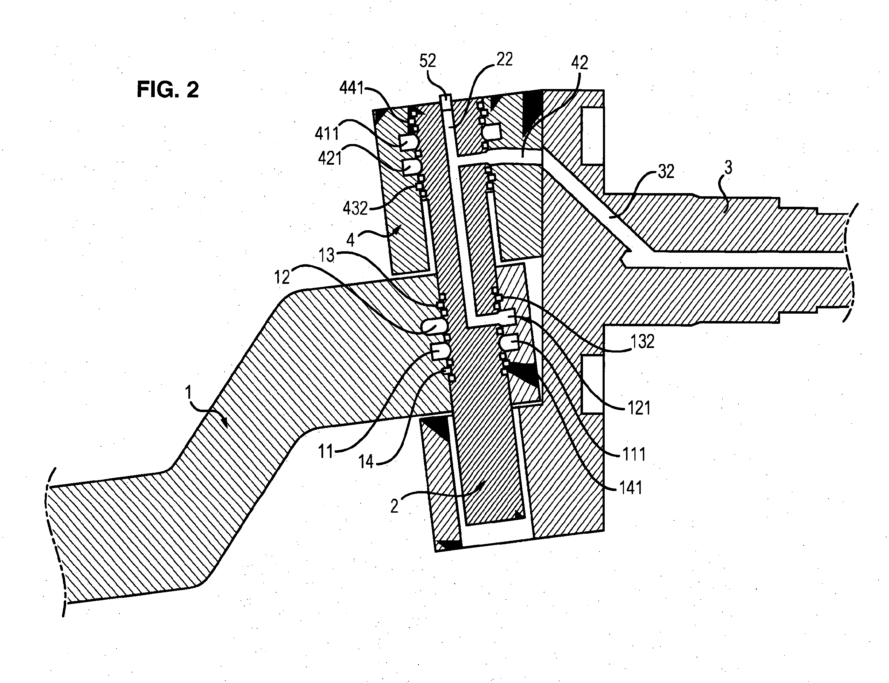

Les figures 2, 3 et 4 présentent des vues en coupe de l'ensemble représenté sur la figure 1 selon deux plans distincts, de manière à visualiser les différents conduits internes aménagés dans les différentes pièces que l'on décrit ci-après.

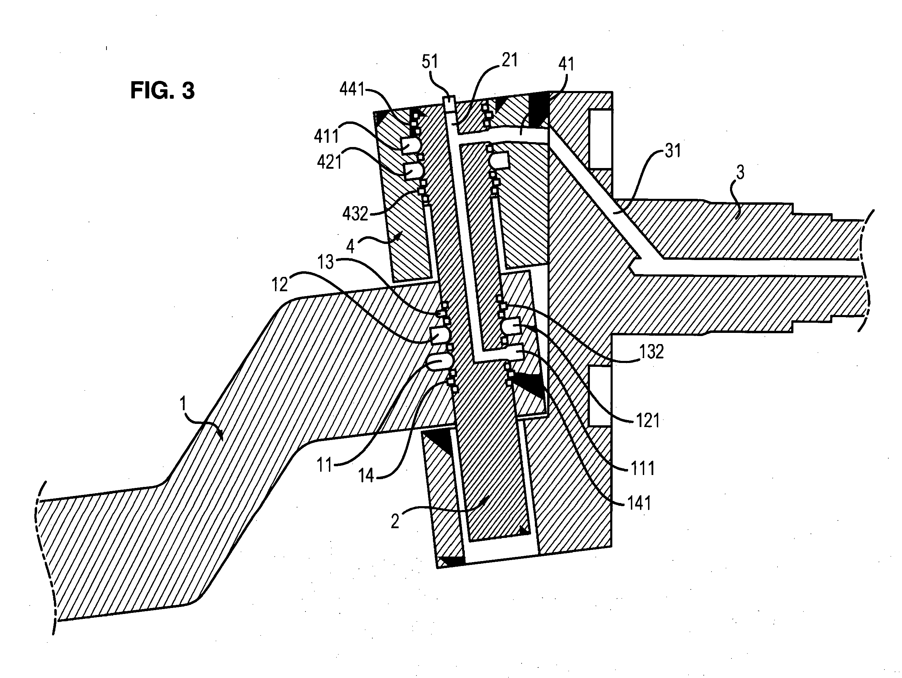

Comme mis en évidence par les figures 2 et 3, les conduits internes 11 et 12 s'étendent dans le corps de l'essieu 1, et débouchent dans le logement cylindrique aménagé à son extrémité et recevant le pivot 2, de manière à être au contact de l'élément d'axe formant le pivot 2.

L'élément d'axe formant le pivot 2 comprend également des conduits internes 21 et 22, débouchant en périphérie dudit pivot 2 de manière à être en connexion fluidique avec les conduits internes 11 et 12 de l'essieu 1, et s'étendent selon l'axe du pivot 2 avant de déboucher à nouveau en périphérie dudit pivot 2, de manière à être au contact de la chape 4, ou de la fusée 3 dans les modes de réalisation sans chape que l'on présentera ultérieurement.

Dans le mode de réalisation représenté, on peut décomposer le conduit interne 22 en deux sections radiales débouchant respectivement en regard de l'essieu 1 et de la chape 4, et une section longitudinale reliant lesdites deux sections radiales, cette section longitudinale débouchant ici à une extrémité de l'élément d'axe du pivot 2, et étant obturée par un bouchon 52. On observe une configuration similaire pour le conduit interne 21, dont la section longitudinale débouchant de l'extrémité de l'élément d'axe du pivot 2 est obturée par un bouchon 51.

D'autres variantes peuvent être envisagées, et on comprend bien que la forme des conduits internes au pivot 2 n'est pas limitée au mode de réalisation représenté. On note de plus que les conduits 21 et 22 peuvent être réalisés par moulage au moyen d'un pivot 2 issu de fonderie ; les conduits sont alors réalisés par des noyaux placés dans le moule et retirés après réalisation de la pièce ; on peut ainsi obtenir des conduits ayant directement la forme souhaitée sans nécessiter un bouchon à l'une des extrémités du pivot 2.

La chape 4 est munie de conduits 41 et 42 traversant, débouchant
- dans le logement cylindrique de la chape 4 dans lequel est disposé l'élément d'axe formant le pivot 2, de manière à être en communication fluidique avec les conduits 21 et 22 du pivot 2, et
- sur la surface de la chape 4 en contact avec la fusée 3.

La fusée 3 est également munie de conduits 31 et 32, débouchant sur la surface de la fusée 3 au contact de la chape 4 de manière à être en communication fluidique avec respectivement les conduits 41 et 42 de la chape 4, et ainsi avec les conduits 11 et 12 de l'essieu 2 et 21 et 22 du pivot 2.
Ces conduits 31 et 32 aménagés dans la fusée 3 débouchent d'autre part par exemple à une extrémité de la fusée adaptée pour recevoir un moteur hydraulique, de manière à être reliés à l'admission et au refoulement d'un tel moteur hydraulique.

Ainsi, en reliant des lignes d'alimentation haute et basse pression respectivement aux conduits 11 et 12 de l'essieu 1, on peut alimenter un moteur hydraulique monté sur la fusée 3, uniquement via des conduits internes à l'essieu 1, au pivot 2, à la fusée 3 et à la chape 4, ce qui évite d'avoir à réaliser des connexion avec des flexibles à proximité d'une roue et d'un frein monté sur la fusée 3, et sans nécessiter l'ajout d'un joint tournant additionnel sur le pivot 2.

Dans le mode de réalisation représenté, l'essieu 1 ainsi que la chape 4 sont munis de gorges aménagées dans les parois de leurs logements cylindriques respectifs destinés à recevoir l'élément d'axe formant le pivot 2.
Ces gorges sont reliées aux conduits respectifs aménagés dans l'essieu 1 et dans la chape 4.
On désigne ainsi par 111 et 121 les gorges aménagées dans le logement cylindrique de l'essieu 1 respectivement reliées aux conduits 11 et 12 de l'essieu 1, et par 411 et 421 les gorges aménagées dans le logement cylindrique de la chape 4 respectivement reliées aux conduits 41 et 42 de la chape 4.
Ces gorges 111, 121, 411 et 421 sont aménagées de manière à être à hauteur des extrémités débouchant des conduits internes 21 et 22 du pivot 2. Elles sont circulaires, et s'étendent sur toute la périphérie des logements cylindriques de l'essieu 1 et de la chape 4, de manière à ce que les conduits 11, 12, 41 et 42 soient être en communication fluidique avec les conduits 21 et 22 quelle que soit la position angulaire de la fusée 3 par rapport à l'essieu 1. On réalise ainsi un joint tournant, dont la mise en place est considérablement simplifiée en ce qu'elle ne nécessite pas d'orientation précise des différents éléments les uns par rapport aux autres pour assurer la communication fluidique.

En variante, ces gorges peuvent être aménagées sur la périphérie externe de l'élément d'axe du pivot 2, de manière à ce qu'elles soient à hauteur des extrémités débouchant des conduits aménagés dans l'essieu 1 afin que les conduits aménagés dans le pivot 2 et dans l'essieu 1 soient en communication fluidique.

La vue en coupe représentée sur la figure 2 illustre un exemple de configuration des conduits 42 et 32 aménagés respectivement dans la chape 4 et dans la fusée 3.
Le conduit 42 aménagé dans la chape s'étend radialement à partir du logement cylindrique aménagé dans la chape 4.
Le conduit 32 aménagé dans la fusée 3 se décompose en deux portions rectilignes ; une première portion inclinée débouchant sur la face de la fusée 3 en contact avec la chape 4, et qui assure la liaison avec le conduit 42 de la chape 4, et une portion s'étendant selon l'axe de rotation défini par la fusée 3, pour une roue montée sur ladite fusée 3. La figure 3 présente une configuration similaire des conduits 41 et 31 aménagés respectivement dans la chape 4 et dans la fusée 3.

L'ensemble composé de l'essieu 1, le pivot 2, la fusée 3 et la chape 4 comprend également des conduits formant le drain et une ligne de pression de carter pour un moteur hydraulique monté sur la fusée 3.

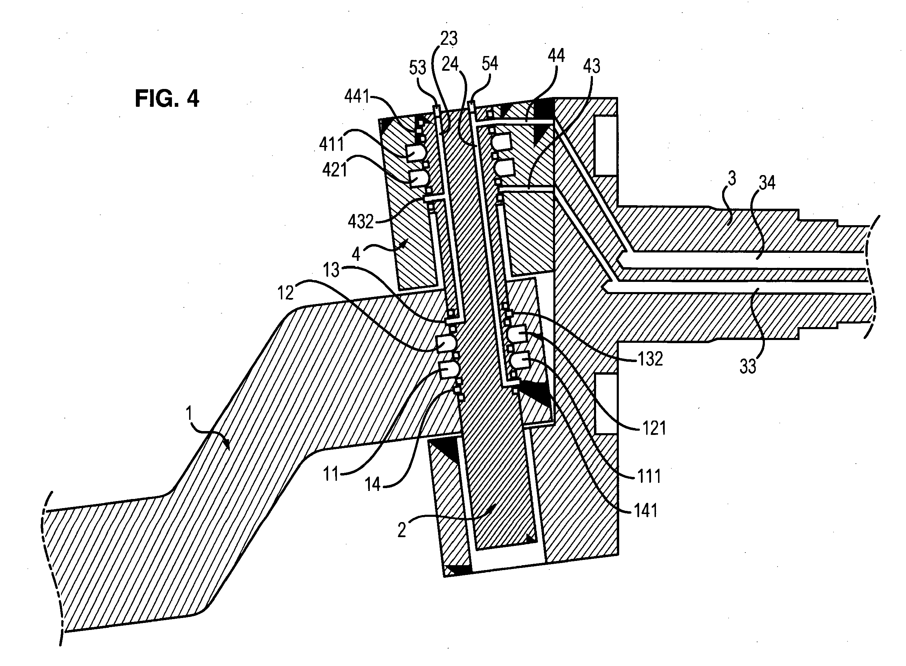

La figure 4 présente une vue en coupe de l'ensemble présenté sur les figures 1 à 3, selon un plan mettant en évidence la structure des différents conduits formant le drain et la ligne de pression de carter.
Le drain est ici formé d'un conduit 13 aménagé dans l'essieu 1, d'un conduit 23 aménagé dans le pivot 2, d'un conduit 43 aménagé dans la chape 4 et d'un conduit 33 aménagé dans la fusée 3.
La ligne de pression de carter est formée d'un conduit 14 aménagé dans l'essieu 1, d'un conduit 24 aménagé dans le pivot 2, d'un conduit 44 aménagé dans la chape 4 et d'un conduit 34 aménagé dans la fusée 3.

Dans le mode de réalisation représenté, le conduit 23 aménagé dans le pivot 2 est composé d'une portion longitudinale s'étendant selon l'axe de l'élément d'axe formant le pivot 2, et débouchant à une de ses extrémités, et d'une pluralité de portions radiales débouchant en périphérie dudit élément d'axe, en regard de l'essieu 1 ou de la chape 4. Le conduit débouchant à l'une des extrémités du pivot 2 est typiquement obturé au moyen d'un bouchon 53 lorsque l'on aménage des conduits 13 dans l'essieu de manière à relier le drain à des lignes d'alimentation comme représenté sur la figure 1. On peut alors, comme dans le cas des conduits 21 et 22, envisager de réaliser les conduits 23 et 24 par moulage, au moyen d'un pivot 2 issu de fonderie ; les conduits sont alors réalisés par des noyaux placés dans le moule et retirés après réalisation de la pièce ; on peut ainsi obtenir des conduits ayant directement la forme souhaitée sans nécessiter un bouchon à l'une des extrémités du pivot 2, de telles techniques de moulage étant bien connues.
On peut également envisager des variantes dans lesquelles l'essieu ne comprend pas un tel conduit 13, et où le drain est connecté à une ligne d'alimentation via sa portion longitudinale débouchant à l'une ou l'autre des extrémités du pivot 2.
Le conduit 24 présente une configuration similaire, comme on le voit sur
la figure 4 ; sa portion longitudinale débouchant est typiquement obturée au moyen d'un bouchon 54.

De plus, dans le mode de réalisation représenté, l'essieu 1 et la chape 4 comprennent chacun deux gorges de fuite, respectivement 141, 132 et 441, 432.
Les gorges de fuite 141 et 132 de l'essieu 1 sont aménagées dans l'essieu 1, de part et d'autre des gorges 111 et 121 décrites précédemment, de manière à encadrer ces deux gorges 111 et 121. La gorge de fuite 141 est aménagée en regard d'une portion débouchant du conduit 24, tandis que la gorge de fuite 132 est aménagée en regard d'une portion débouchant du conduit 23
Les gorges de fuite 441 et 432 de la chape 4 sont aménagées dans la chape 4, de part et d'autre des gorges 411 et 421 décrites précédemment, de manière à encadrer ces deux gorges 411 et 421. La gorge de fuite 441 est aménagée en regard d'une portion débouchant du conduit 24, tandis que la gorge de fuite 432 est aménagée en regard d'une portion débouchant du conduit 23.
Ces gorges de fuite 141, 132, 441 et 432 permettent de recueillir d'éventuelles fuites provenant des gorges 111, 121, 411 ou 421, et d'évacuer le fluide ainsi recueilli par exemple vers un réservoir à pression ambiante via le drain, ou vers le carter d'un moteur monté sur la fusée 3, et ainsi de sécuriser l'étanchéité vis-à-vis de l'environnement car les joints extérieurs ne subissent pas de pressions importantes.

Comme précédemment, en variante, ces gorges peuvent être aménagées sur la périphérie externe de l'élément d'axe du pivot 2, de manière à ce qu'elles soient à hauteur des extrémités débouchantes des conduits aménagés dans la fusée 3 afin que les conduits aménagés dans le pivot 2 et dans la fusée 3 soient en communication fluidique.

Comme indiqué précédemment, la chape 4 comprend un conduit 43, débouchant dans le logement cylindrique de la chape 4 de manière à être en connexion fluidique avec le conduit 23 aménagé dans le pivot 2, et débouchant également sur la surface de la chape 4 en contact avec la fusée 3.
Dans le mode de réalisation représenté, ce conduit 43 est sensiblement radial par rapport à l'axe du logement cylindrique de la chape 4.
La fusée 3 comprend un conduit 33 débouchant sur la surface de la fusée 3 au contact de la chape 4 de manière à être en communication fluidique avec le conduit 43 de la chape 4, et ainsi avec le conduit 23 du pivot 2. Ce conduit 33 aménagé dans la fusée 3 débouche d'autre part par exemple à une extrémité de la fusée 3 adaptée pour recevoir un moteur hydraulique, de manière à être relié au drain d'un tel moteur hydraulique.

De manière similaire, la fusée comprend un conduit 34 débouchant sur la surface de la fusée 3 au contact de la chape 4 de manière à être en communication fluidique avec le conduit 44 de la chape 4, et ainsi avec le conduit 24 du pivot 2. Ce conduit 34 aménagé dans la fusée 3 débouche d'autre part par exemple à une extrémité de la fusée 3 adaptée pour recevoir un moteur hydraulique, de manière à être relié à la ligne de pression de carter d'un tel moteur hydraulique.

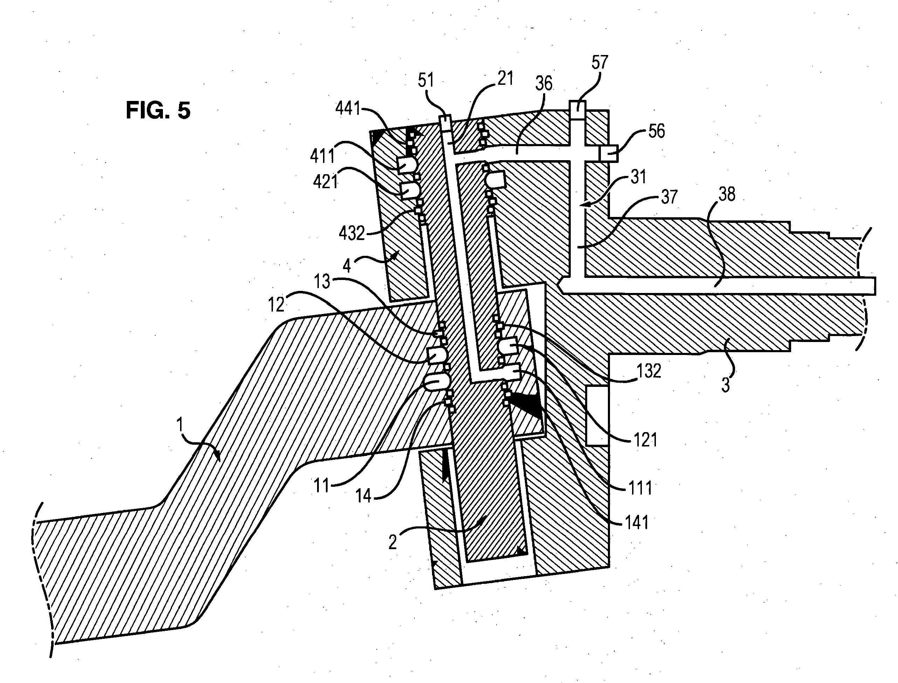

La figure 5 illustre une vue en coupe d'une variante de l'ensemble représenté sur les figures précédentes, dans laquelle la chape 4 fait partie de la fusée 3.
L'ensemble se compose donc des éléments suivants : l'essieu 1, le pivot 2 et la fusée 3. La fusée 3 telle que représentée comprend deux logements cylindriques adaptés pour recevoir le pivot 2, et le conduit 33 de la fusée débouche directement dans ce logement cylindrique, de manière à être en communication fluidique avec le conduit 23 du pivot, et ainsi former une ligne de drain.
Dans cette variante, le conduit 31 de la fusée est formé de plusieurs conduits sensiblement perpendiculaires aménagés dans la fusée 3 :
- un premier conduit 36 s'étendant à partir de la surface interne du logement cylindrique de la fusée 3, sensiblement parallèle à l'axe de rotation de roue défini par la fusée 3,
- un troisième conduit 38 s'étendant le long de la fusée 3, selon l'axe de rotation qu'elle définit, et
- un second conduit 37, sensiblement perpendiculaire auxdits premier et second conduits, et permettant de les relier.
Les premier 36 et deuxième 37 conduits sont typiquement débouchant sur la face de la fusée 3 opposée au pivot 2 ; ils sont donc obturés au moyen de bouchons, respectivement 56 et 57.
Les autres conduits présentent typiquement une configuration analogue à celle présentée sur les figures 3 et 4, à l'exception des conduits aménagés dans la fusée 3 qui sont typiquement formés de la même manière que le conduit 31 présenté sur la figure 5, c'est-à-dire de trois conduits sensiblement perpendiculaires.

Vis-à-vis de cette configuration de conduits ; on note que la variante représentée sur les figures 1 à 4 dans laquelle la fusée est associée à une chape 4 distincte permet d'éviter d'avoir des coudes avec un angle de l'ordre de 90°, et favorisent ainsi la circulation du fluide.

Les configurations de conduits aménagés dans l'essieu 1, le pivot 2, la fusée 3 et le cas échéant dans la chape 4 représentés sur les figures et décrits précédemment le sont à titre d'exemples ; d'autres modes de réalisation sont bien entendu envisageables.

D'autres variantes sont bien entendu possibles, notamment dans lesquelles le drain et/ou la ligne de pression de carter s'étendent jusque dans l'essieu 1 de la même manière que les conduits 11 et 12 décrits précédemment.

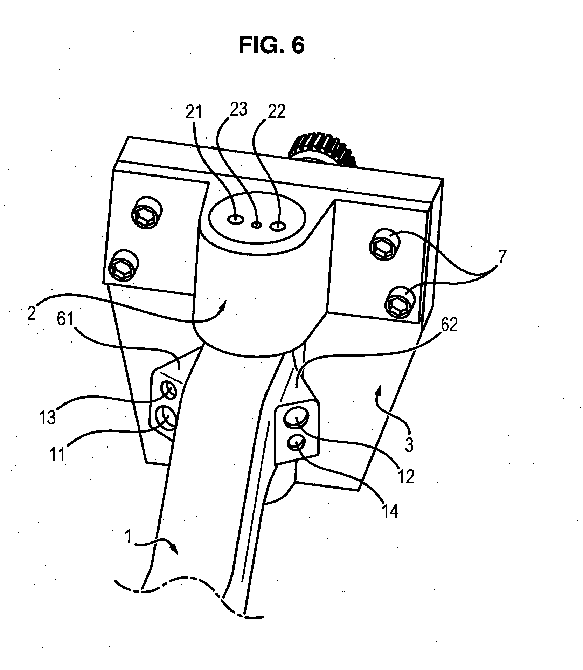

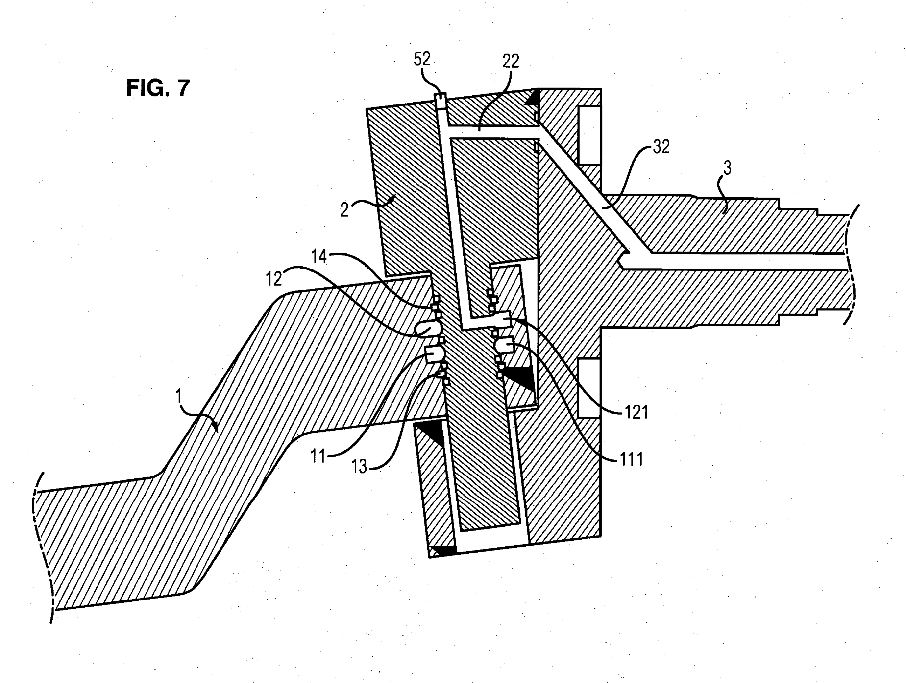

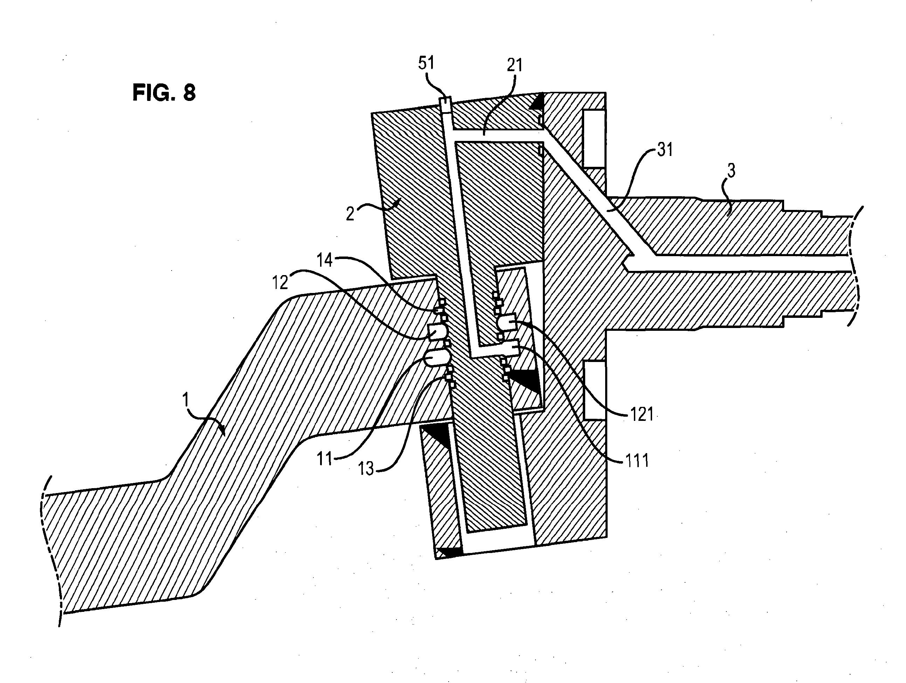

Les figures 6 à 9 présentent des vues similaires aux vues présentées sur les figures 1 à 4 d'une variante d'un ensemble selon l'invention.
Dans cette variante, le pivot 2 est monté fixe sur la fusée 3 ; le pivot 2 de ce mode de réalisation correspond à l'association du pivot 2 et de la chape 4 du mode de réalisation présenté sur les figures 1 à 4, qui forment ici une unique pièce boulonnée sur la fusée 3.
Le système ainsi formé par la fusée 3 et le pivot 3 est alors monté tournant par rapport à l'essieu 1 du fait du logement cylindrique aménagé dans l'essieu et dans lequel est inséré le corps tubulaire du pivot 2.

De la même manière que pour le mode de réalisation illustré sur les figures 1 à 4, on aménage des conduits dans l'essieu 1, le pivot 2 et la fusée 3.
Dans la mesure où le pivot 2 est monté fixe sur la fusée 3, un unique joint tournant est nécessaire à l'interface entre le pivot 2 et l'essieu 1.

Par conséquent, seul l'essieu 1 comprend des gorges 111 et 121 aménagées dans son logement cylindrique adapté pour recevoir le pivot 2, ces gorges 111 et 121 étant encadrées par des gorges de fuite 132 et 141 qui sont reliées respectivement aux conduits 23 et 24 aménagés dans le pivot 2, adaptés pour former respectivement le drain et la ligne de pression de carter d'un moteur hydraulique monté sur la fusée 3.

L'invention permet ainsi de réaliser une connexion fluidique dans un pivot de roue qui ne nécessite pas l'ajout de pièces additionnelles et volumineuses telles qu'un joint tournant couplé au pivot qui prennent de la place au niveau de l'extrémité supérieure ou inférieure du pivot, et dans laquelle les conduits hydrauliques nécessaires au fonctionnement d'un moteur hydraulique monté sur la fusée de roue, à savoir deux lignes d'alimentation (respectivement haute pression et basse pression), un drain et le cas échéant une ligne de pression de carter sont aménagés à l'intérieur même des différents composants, ce qui évite d'avoir des branchements à réaliser à proximité des roues et freins, et d'avoir des flexibles monté sur un élément tournant.

De plus, dans le cas où le pivot de roue fait passer de l'huile hydraulique, et présente des joints réalisant l'étanchéité des différents conduits, typiquement des joints tels qu'on le décrit ci-après, le pivot réalise alors également un fonction de palier en rotation.
La lubrification des zones formant un palier mécanique peut alors être réalisée soit par de l'huile, soit par de la graisse ce qui permet d'obtenir une durée de vie supérieure.

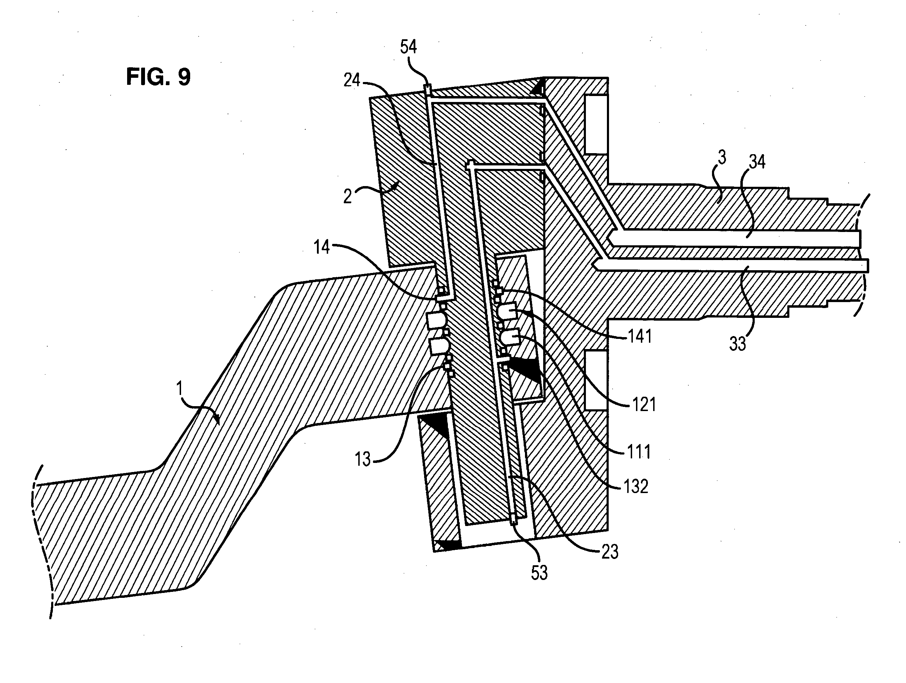

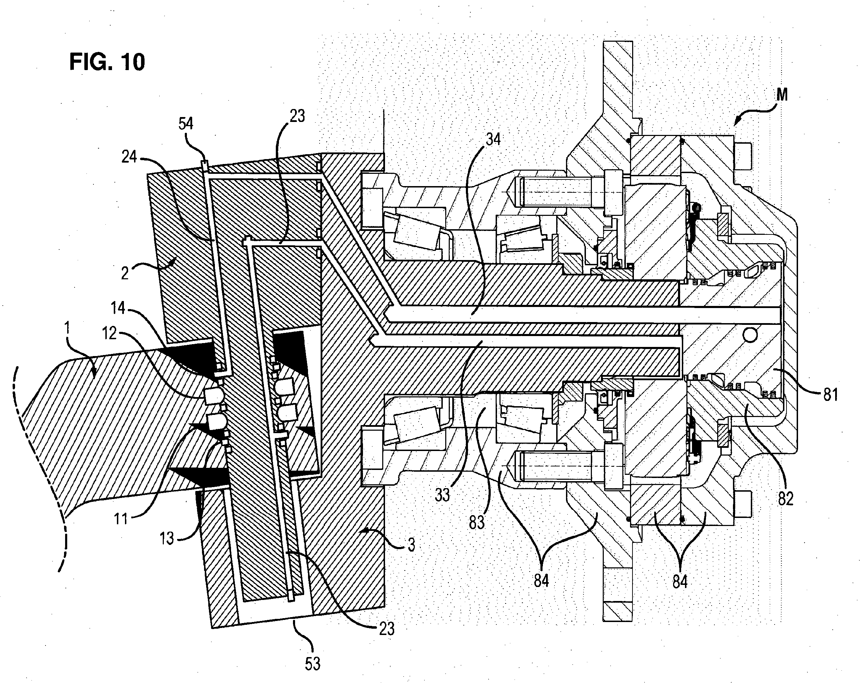

La figure 10 présente une vue en coupe similaire à celle de la figure 9, comprenant en outre un moteur hydraulique M monté sur la fusée 3.
Le moteur M comprend une contre-glace 81 disposée dans le prolongement de l'extrémité libre de la fusée 1, une glace 82 autour de ladite contre-glace 81, des roulements 83 qui réalisent le montage du moteur M tournant sur la fusée 3, et un carter 84, ici formé de plusieurs pièces assemblées.
Cette figure montre un exemple de configuration dans laquelle la ligne de drain 33 est adaptée pour recueillir du fluide hydraulique provenant de fuites au niveau d'un élément d'étanchéité dynamique, tandis que la ligne de pression de carter se prolonge via un conduit aménagé dans la contre-glace 81, de manière à pouvoir évacuer la pression du carter 84 du moteur M.
Selon un tel exemple de configuration, la pression dans la ligne de drain est typiquement inférieure à 3 bar afin de ne pas endommager l'élément d'étanchéité dynamique, tandis que la pression dans le carter du moteur M peut atteindre des pressions de l'ordre de 50 bar.

Le moteur M tel que présenté est relié à une ligne haute pression et une ligne basse pression qui débouchent entre la glace 82 et la contre-glace 81, via les conduits aménagés dans l'ensemble formé de l'essieu 1, du pivot 2 et de la fusée 3 ; respectivement :
- le conduit 11 aménagé dans l'essieu 1, le conduit 21 aménagé dans le pivot 2 et le conduit 31 aménagé dans la fusée 3 ;
- le conduit 12 aménagé dans l'essieu 1, le conduit 22 aménagé dans le pivot 2 et le conduit 32 aménagé dans la fusée 3.
Selon le fonctionnement du moteur, ces conduits peuvent correspondre respectivement à la ligne haute pression et à la ligne basse pression, ou inversement.

Sur l'ensemble des figures, on a ainsi représenté des lignes « haute pression » ; typiquement les lignes d'alimentation et de refoulement du moteur M tel qu'on le représente sur la figure 10, dans lesquelles la pression peut atteindre des valeurs de l'ordre de 450 bars, et des lignes « basse pression », typiquement les lignes de drain et les lignes de pression de carter, dans lesquelles la pression est typiquement inférieure ou égale à 30 bars.

Afin d'assurer l'étanchéité de ces conduits, on les encadre avec des joints d'étanchéité pouvant être de plusieurs formes selon l'utilisation souhaitée.
Sur l'ensemble des figures 11 à 20, on présente schématiquement un conduit 91, aménagé sous forme d'une gorge entre deux pièces 92 et 93 montés tournantes l'une par rapport à l'autre.
Par analogie avec les figures précédentes, la pièce 92 est par exemple le pivot 2 et la pièce 93 est typiquement l'essieu 1 ou la fusée de roue 3. Le conduit 91 est encadré par deux gorges d'étanchéité 94 et 95, ici aménagées dans la même pièce 92 que celle dans laquelle est aménagée la gorge formant le conduit 91. On comprend bien que les gorges formant les différents conduits peuvent être aménagées indifféremment dans l'une ou l'autre des pièces 92 ou 93.

On présente en premier lieu sur les figures 11 à 15 plusieurs variantes de joints d'étanchéité pouvant être utilisés afin d'encadrer et ainsi assurer l'étanchéité de lignes haute pression, par exemple afin d'encadrer les conduits 11, 12, 21, 22, 111, 121, 411 et 421 présentés précédemment. Sur ces figures, le conduit 91 est typiquement un conduit haute pression tel que défini précédemment.
Les matériaux ainsi que les structures spécifiques de ces joints d'étanchéité sont adaptés pour leur conférer une résistance et assurer leur maintien en position à des valeurs de pression élevées, typiquement allant jusqu'à 450 bars.
On comprend bien que les joints d'étanchéité présentés sur ces figures peuvent également être utilisés pour réaliser l'étanchéité de lignes basse pression.

Dans le mode de réalisation représenté sur la figure 11, chacune des gorges d'étanchéité 94 et 95 comprend un élément d'étanchéité 9 formé d'un patin 9111 monté serré contre la pièce 93, surmonté d'un joint d'étanchéité torique 9112.

Le patin 9111 est typiquement réalisé en matériau ayant un faible coefficient de frottement, typiquement en polytétrafluoroéthylène (PTFE) ou en acétal.
Le joint d'étanchéité torique 9112 est typiquement réalisé en matériau élastomère, par exemple en caoutchouc.
Sous l'effet de la pression au sein du conduit 91, les patins 9111 et les joints d'étanchéité toriques 9112 sont en appui contre les parois des gorges d'étanchéité 94 et 95 opposées au conduit 91, les patins 9111 permettant de s'assurer que les joints d'étanchéité toriques 9112 ne soient pas expulsés via le jeu fonctionnel entre les pièces 92 et 93 sous l'effet de la pression régnant au sein du conduit 91.

La figure 12 présente un autre mode de réalisation, dans lequel l'élément d'étanchéité 9 est composé d'un joint 9121 ayant une forme générale de V, typiquement réalisé en plastique, monté de sorte que les deux branches du V soient précontraintes entre les pièces 92 et 93, et comprenant avantageusement une armature métallique 9122, ayant également une forme de V, réalisé sous forme d'un insert accolé à la surface interne du joint 9121 en V.
Ce type d'élément d'étanchéité fonctionne de manière similaire à l'élément d'étanchéité d'un vérin ; sous l'effet de la pression au sein du conduit 91, l'élément d'étanchéité est mis en appui contre les parois des gorges d'étanchéité 94 et 95 opposées au conduit 91, et la pression sur la face interne du V la maintenir ses branches plaquées contre les parois des pièces 92 et 93, assurant ainsi l'étanchéité.

La figure 13 présente encore un autre mode de réalisation, dans lequel l'élément d'étanchéité 9 est composé d'un segment 9131, typiquement réalisé en fonte ou en plastique. Ce segment 9131 est monté serré contre la pièce 93, ou plus généralement contre la pièce opposée à celle dans laquelle est aménagée la gorge dans laquelle il est disposé.
Ce segment fonctionne de manière similaire au patin présenté sur la figure 11 ; sous l'effet de la pression au sein du conduit 91 il est plaqué contre les parois des gorges d'étanchéité 94 et 95 opposées au conduit 91, et obture ainsi le jeu fonctionnel existant entre les pièces 92 et 93.

La figure 14 présente encore un autre mode de réalisation, dans lequel l'élément d'étanchéité 9 est composé d'une bague 9141 anti-extrusion et d'un joint torique 9142. La bague 9141 est typiquement réalisée en matériau similaire au patin 9111 présenté sur la figure 11 ou au segment 9131 présenté sur la figure 13.
La bague anti-extrusion 9141 est montée de manière similaire au segment 9131 présenté sur la figure 13, de manière à empêcher que le joint torique 9142 soit expulsé via le jeu fonctionnel entre les pièces 92 et 93 sous l'effet de la pression régnant au sein du conduit 91.

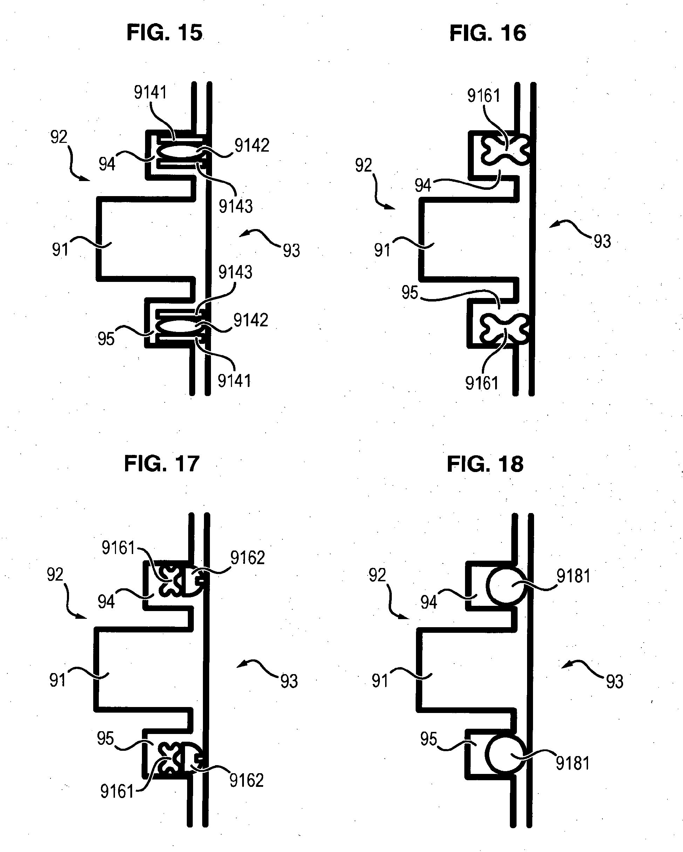

La figure 15 présente une variante du mode de réalisation présenté sur la figure 14, dans lequel le joint torique 9142 est encadré par deux bagues anti-extrusion 9141 et 9143. Le fonctionnement est similaire à celui du mode de réalisation présenté sur la figure 14, tout en assurant la résistance du joint torique 9142 à l'extrusion en cas de changement du sens d'application de la pression.
Cette variante spécifique est avantageuse par exemple pour réaliser l'étanchéité entre les conduits 11 et 12, 21 et 22, 111 et 121 ou encore 421 et 422 présentés sur les figures précédentes et formant typiquement l'admission et le refoulement d'un appareil hydraulique réversible, ce qui implique donc que le rôle et le rapport de pression entre par exemple les conduits 11 et 12 peuvent changer au cours de l'utilisation, l'élément d'étanchéité étant alors plaqué successivement contre l'une ou l'autre des parois du logement dans lequel il est disposé.

On présente également sur les figures 16 à 20 plusieurs variantes de joints d'étanchéité pouvant être utilisés afin d'encadrer et ainsi assurer l'étanchéité de lignes basse pression, par exemple afin d'encadrer les conduits 13, 14, 23, 24, 132, 141, 441 et 432 présentés précédemment. Ces différents joints d'étanchéité peuvent également être utilisés afin d'encadrer des zones palières lubrifiées au moyen d'huile hydraulique à basse pression, permettant ainsi d'avoir des paliers sans entretien.

Dans le mode de réalisation représenté sur la figure 16, chacune des gorges d'étanchéité 94 et 95 comprend un élément d'étanchéité 9 formé d'un joint multilobes 9161, en l'occurrence un joint circulaire à 4 lobes en appui contre la pièce 93 de manière à obturer le jeu fonctionnel entre les pièces 92 et 93.
Ce joint multilobes 9161 est typiquement réalisé en matériau élastomère, caoutchouc ou nitrile.

Le mode de réalisation représenté sur la figure 17 est une variante du mode de réalisation présenté sur la figure 16, dans lequel le joint multilobes 9161 est couplé à un patin 9162 en appui contre la pièce 93 opposée à la pièce 92 dans laquelle est aménagé le logement 94 de l'élément d'étanchéité 9.
Le patin tel que présenté comprend une face d'appui 9163 sensiblement plane contre laquelle repose le joint multilobes 9161, et une face de contact 9164 incurvée, en appui contre la pièce 93, et présentant en son centre une rainure formant une réserve de graisse.

Dans le mode de réalisation représenté sur la figure 18, chacune des gorges d'étanchéité 94 et 95 comprend un élément d'étanchéité 9 formé d'un joint torique 9181 conventionnel.

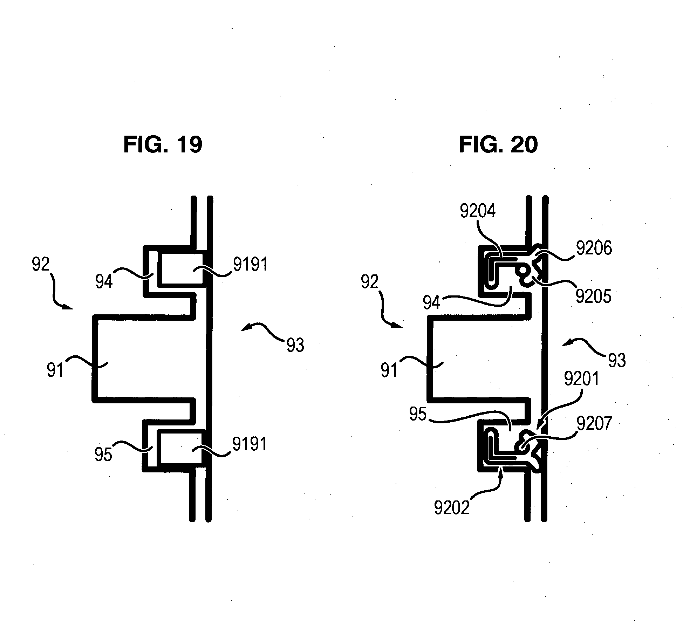

Dans le mode de réalisation représenté sur la figure 19, chacune des gorges d'étanchéité 94 et 95 comprend un élément d'étanchéité 9 formé d'un joint circulaire de section carrée 9191.

Dans les modes de réalisation présentés sur les figures 18 et 19, le joint torique 9181 ou à section carré 9191 est typiquement réalisé en caoutchouc, nitrile ou en matériau élastomère.

Dans le mode de réalisation représenté sur la figure 20, chacune des gorges d'étanchéité 94 et 95 comprend un élément d'étanchéité 9 formé d'une bague à lèvre 9201 bien connue de l'homme du métier.
La bague à lèvre 9201 est composée de trois éléments distincts :
- Une armature métallique 9202, par exemple une bague en forme de L.
- Un corps typiquement réalisé en caoutchouc, lui-même formé d'un habillage 9204 typiquement surmoulé sur l'armature métallique 9202, adaptée pour être au contact du fond du logement 94 ou 95 dans lequel la bague à lèvre 9201 est disposée, et une membrane 9205 adaptée pour être au contact de la pièce 93 opposée à celle dans laquelle est aménagé ledit logement 94 ou 95. Le corps peut également comprendre une lèvre 9206 anti-poussière ou lèvre racleuse optionnelle adaptée pour être également au contact de la pièce 93 opposée à celle dans laquelle est aménagé le logement 94 ou 95, et empêcher que des particules (sable, poussière, impuretés etc...) ne pénètrent dans ledit logement 94 ou 95 via le jeu fonctionnel entre les pièces 92 et 93.
- Un moyen de serrage 9207, typiquement un ressort à spirale adapté pour maintenir la bague à lèvre 9201, et plus précisément la membrane 9205 de la bague à lèvre 9201 en appui contre la pièce 93 opposée à celle dans laquelle est aménagé le logement 94 ou 95.

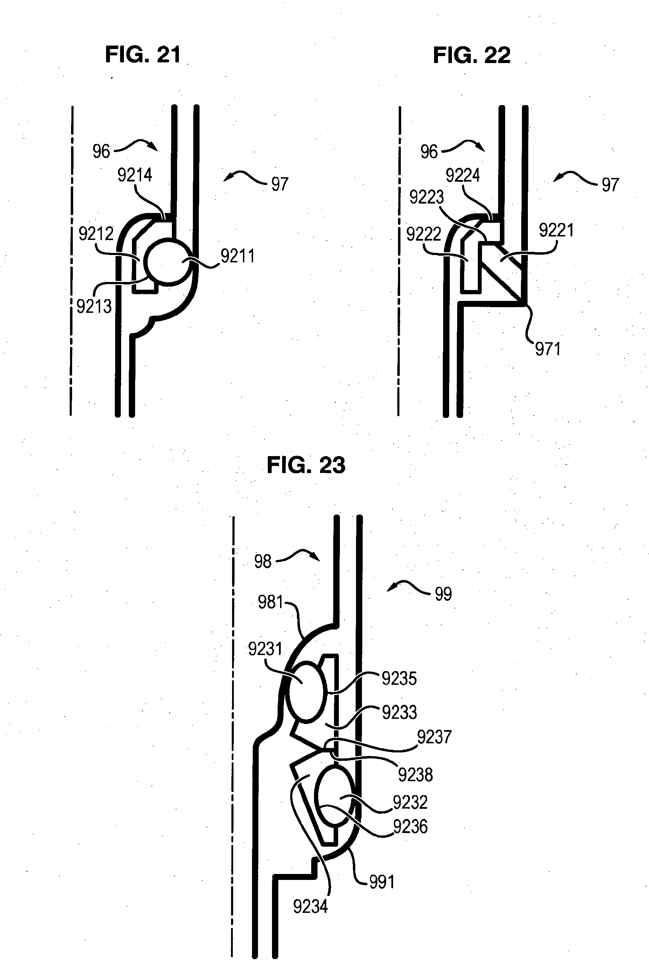

Les figures 21 et 22 présentent deux autres variantes d'éléments d'étanchéité 9 pouvant être typiquement utilisés afin de réaliser l'étanchéité entre deux éléments dans un logement autre qu'une gorge spécialement aménagée.
Dans les modes de réalisation représentés sur les figures 21 et 22, l'élément d'étanchéité est disposé entre deux pièces 96 et 97 présentant chacune un décrochement, formant ainsi un logement dans lequel l'élément d'étanchéité est disposé.
Dans le mode de réalisation présenté sur la figure 21, l'élément d'étanchéité est formé d'un joint torique 9211 typiquement réalisé en caoutchouc, couplé à une bague 9212 métallique ayant une forme générale de coin, présentant une surface incurvée 9313 servant d'appui au joint torique 9211, et une surface plane 9214 venant en appui contre la pièce 96. La bague 9212 comprime le joint torique 9211 contre la pièce 97, réalisant ainsi l'étanchéité entre les deux pièces 96 et 97.
La surface plane 9214 est avantageusement réduite, afin d'améliorer l'étanchéité de l'ensemble en réduisant l'impact d'imperfections de surface.
Le mode de réalisation représenté sur la figure 22 est une variante de celui présenté sur la figure 21 ; l'élément d'étanchéité est formé d'un joint 9221 typiquement réalisé en caoutchouc et ayant une forme générale de trapèze, couplé à une bague 9222 métallique ayant une forme générale de coin présentant une surface d'appui 9223 en forme de coin. Le joint 9221 est ainsi comprimé par la bague 9222 entre le coin 9223 de la bague 9222 et un angle 971, typiquement un angle droit formé dans la pièce 97. La bague 9222 présente également une surface plane 9224 venant en appui contre la pièce 96, ladite surface plane 9224 étant avantageusement réduite, afin d'améliorer l'étanchéité de l'ensemble en réduisant l'impact d'imperfections de surface.

La figure 23 présente une variante du mode de réalisation présenté sur la figure 21, comprenant deux couples bague-joint d'étanchéité.
On présente ainsi deux pièces 98 et 99 présentant chacune une surface d'appui courbée respectivement 981 et 991.
L'élément d'étanchéité 9 comprend deux joints 9231 et 9232, en l'occurrence des joints toriques typiquement réalisés en caoutchouc, couplés à des bagues 9233 et 9234 présentant chacune une surface incurvée, respectivement 9235 et 9236 adaptées pour servir d'appui aux deux joints toriques 9231 et 9232 qui sont comprimés respectivement entre la bague 9223 et la surface d'appui courbée 981 de la pièce 98 et la bague 9234 et la surface d'appui courbée 991 de la pièce 99.
Ces deux bagues 9233 et 9234 sont en appui l'une contre l'autre, selon des surfaces d'appui aménagées, respectivement 9237 et 9238. Ces surfaces d'appui sont avantageusement réduites, afin d'améliorer l'étanchéité entre ces bagues 9233 et 9234 en réduisant l'impact d'imperfections de surface. Dans le mode de réalisation représenté, on réalise cette réduction des surfaces de contact via des chanfreins aménagés dans les bagues 9233 et 9234.

Les différents modes de réalisation décrits permettent d'assurer l'étanchéité des différents conduits présentés, et ce quelles que soient leurs conditions d'utilisation.
Ces différents éléments d'étanchéité peuvent en outre être également employés pour réaliser l'étanchéité des conduits du système présenté dans la demande de brevet FR1162205 au nom de la demanderesse, non encore publiée, ou plus généralement dans toute machine hydraulique.
D'autres variantes d'éléments d'étanchéité sont bien connues de l'Homme du métier ; on peut notamment citer les publications suivantes :
- Catalogue R joints toriques, O-rings , le joint français, Imprimerie Monnier, Edition 06-94,
- Catalogue R joints toriques O-rings - Dimensions , le joint français, Imprimerie Monnier, Edition 08-94,
- Catalogue « JF 4 » Joints quadrilobes, X rings, le joint français, Imprimerie Monnier, publié le 01/04/93,
- Catalogues de la société Simrit, notamment « joints hydrauliques et pneumatiques », « bagues Simmerring ® et joints pour mouvements tournants », éditeur Carl Freudenberg.

## Revendications

1. Ensemble, comprenant
- un essieu (1),
- un pivot (2) de direction monté sur l'essieu (1),
- une fusée (3) de roue montée sur le pivot (2),
- un moteur hydraulique et une roue montés sur ladite fusée (3),
de sorte que la fusée (3) soit montée pivotant par rapport à l'essieu (1), l'essieu (1), la fusée (3) et le pivot (2) étant munis de conduits hydrauliques communicants pour alimenter le moteur hydraulique en fluide, les conduits hydrauliques étant aménagés dans l'essieu (1), le pivot (2) et la fusée de (3) manière à ce que le pivot (2) réalise un joint tournant assurant la connexion fluidique desdits conduits aménagés dans l'essieu (1), le pivot (2) et la fusée (3) lors du pivotement de la fusée (3) par rapport à l'essieu (1),
**caractérisé en ce que** le pivot (2) comprend un élément d'axe emmanché dans l'essieu (1) et dans lequel sont aménagés lesdits conduits hydrauliques, la fusée (3) étant montée pivotant sur l'élément d'axe, l'essieu (1) et la fusée (3) comprenant chacun des gorges s'étendant autour dudit élément d'axe et reliées respectivement aux conduits hydrauliques de l'essieu (1) et de la fusée (3) de manière à réaliser ainsi le joint tournant avec les conduits hydrauliques du pivot (2).

2. Ensemble selon la revendication 1, dans lequel les conduits aménagés dans l'essieu (1) correspondent à une ligne haute pression et une ligne basse pression reliées au moteur hydraulique, chaque essieu (1) et fusée (3) comprenant ainsi deux gorges pour former une connexion fluidique entre lesdits conduits formant les lignes haute et basse pression de l'essieu (1), du pivot (2) et de la fusée (3).

3. Ensemble selon la revendication 2, dans lequel l'essieu (1) et la fusée (3) comprennent en outre deux gorges de fuite disposées de part et d'autre desdites gorges, lesdites gorges de fuite étant reliées à une ligne de drain débouchant dans un réservoir à pression ambiante et/ou à une ligne de pression de carter du moteur hydraulique, et étant adaptées pour recueillir les fuites provenant du joint tournant.

4. Ensemble, selon l'une des revendications 1 à 3 dans lequel lesdits conduits sont chacun encadrés par des gorges d'étanchéité munies d'éléments d'étanchéité haute pression ou basse pression.

5. Ensemble selon l'une des revendications 1 à 4, dans lequel le pivot (2) comprend un élément d'axe emmanché dans l'essieu (1) et dans lequel sont aménagés lesdits conduits hydrauliques, ledit élément d'axe comprenant des gorges périphériques reliées aux conduits aménagés dans cet élément d'axe, de sorte que ces gorges soient en communication fluidique avec les conduits aménagés dans l'essieu (1) et dans la fusée (3).

6. Ensemble selon la revendication 5, dans lequel ledit pivot (2) est muni d'au moins deux zones palières mécaniques le reliant à l'essieu (1), chacune desdites zones palières mécaniques étant encadrée par des éléments d'étanchéité comprenant des gorges aménagées dans ledit pivot (2) ou dans ledit essieu (1) dans lesquelles sont disposés des joints d'étanchéité.

7. Ensemble selon la revendication 6, dans lequel au moins une desdites zones palières est lubrifiée au moyen d'huile hydraulique, ladite zone palière étant reliée au moyen d'une ligne de fuite à un conduit hydraulique aménagé dans l'essieu (1), la fusée (3) ou le pivot (2) de manière à assurer l'alimentation en huile hydraulique de ladite zone palière.

8. Ensemble selon l'une des revendications 1 à 7, dans lequel lesdits conduits aménagés dans l'essieu (1) débouchent dudit essieu (1) sur des surfaces comprenant des moyens de fixation de flexibles afin de les relier auxdits conduits aménagés dans l'essieu (1).

9. Ensemble selon l'une des revendications 1 à 8, comprenant en outre une chape (4) fixée sur ladite fusée (3) de roue et montée tournante autour dudit pivot (2), ladite chape (4) comprenant des conduits adaptés pour permettre une connexion fluidique entre les conduits aménagés dans le pivot (2) et dans la fusée (3).

10. Ensemble selon la revendication 9, dans lequel ledit pivot (2) est muni d'au moins deux zones palières mécaniques le reliant à la chape (4), chacune desdites zones palières mécaniques étant encadrée par des éléments d'étanchéité comprenant des gorges aménagées dans ledit pivot (2) ou dans ladite chape (4) dans lesquelles sont disposés des joints d'étanchéité.

11. Ensemble selon l'une des revendications 1 à 8, dans lequel le pivot (2) est monté fixe sur la fusée (3) de sorte que le système formé par le pivot (2) et la fusée (3) soit monté pivotant par rapport à l'essieu (1).

12. Véhicule comprenant une roue directrice montée sur un ensemble selon l'une des revendications 1 à 11, ainsi que des moyens d'alimentation des moteurs hydraulique en fluide hydraulique, la connexion fluidique entre lesdits moyens d'alimentation et lesdits moteurs étant réalisée au moyen des conduits aménagés dans lesdits essieu (1), pivot (2) et fusée (3).

## Patentansprüche

1. Baugruppe, die Folgendes umfasst:
- eine Achse (1),
- einen Achsschenkelbolzen (2), der auf der Achse (1) angebracht ist,
- einen Achsschenkel (3), der auf dem Achsschenkelbolzen (2) angebracht ist,
- einen Hydromotor und ein Rad, die auf dem Achsschenkel (3) angebracht sind,
derart, dass der Achsschenkel (3) in Bezug zur Achse (1) drehbar gelagert ist,
wobei die Achse (1), der Achsschenkel (3) und der Achsschenkelbolzen (2) mit Hydraulikleitungen versehen sind, die miteinander verbunden sind, um den Hydromotor mit Fluid zu versorgen, wobei die Hydraulikleitungen derart in der Achse (1), dem Achsschenkelbolzen (2) und dem Achsschenkel (3) eingerichtet sind, dass der Achsschenkelbolzen (2) eine Drehverbindung ausführt, die die Fluidverbindung der Leitungen, die in der Achse (1), dem Achsschenkelbolzen (2) und dem Achsschenkel (3) eingerichtet sind, beim Drehen des Achsschenkels (3) in Bezug zur Achse (1) gewährleistet,
**dadurch gekennzeichnet, dass** der Achsschenkelbolzen (2) ein Achsenelement umfasst, das in der Achse (1) aufgepresst ist und in dem die Hydraulikleitungen eingerichtet sind, wobei der Achsschenkel (3) drehbar auf dem Achsenelement gelagert ist, wobei die Achse (1) und der Achsschenkel (3) jeweils Nuten umfassen, die sich um das Achsenelement herum erstrecken und derart mit den Hydraulikleitungen der Achse (1) beziehungsweise des Achsschenkels (3) verbunden sind, dass so die Drehverbindung mit den Hydraulikleitungen des Achsschenkelbolzens (2) ausgeführt wird.

2. Baugruppe nach Anspruch 1, wobei die Leitungen, die in der Achse (1) eingerichtet sind, einer Hochdruckleitung und einer Niederdruckleitung entsprechen, die mit dem Hydromotor verbunden sind, wobei jede Achse (1) und jeder Achsschenkel (3) so zwei Nuten umfasst, um eine Fluidverbindung zwischen den Leitungen zu bilden, die die Hoch- und Niederdruckleitungen der Achse (1), des Achsschenkelbolzens (2) und des Achsschenkels (3) bilden.

3. Baugruppe nach Anspruch 2, wobei die Achse (1) und der Achsschenkel (3) ferner zwei Leckagenuten umfassen, die auf beiden Seiten der Nuten angeordnet sind, wobei die Leckagenuten mit einer Drainageleitung, die in einen Behälter mit Umgebungsdruck mündet, und/oder mit einer Gehäusedruckleitung des Hydromotors verbunden sind und angepasst sind, um die Leckagen aufzufangen, die von der Drehverbindung stammen.

4. Baugruppe nach einem der Ansprüche 1 bis 3, wobei die Leitungen jeweils durch Dichtungsnuten eingerahmt sind, die mit Hochdruck- oder Niederdruck-Dichtungselementen versehen sind.

5. Baugruppe nach einem der Ansprüche 1 bis 4, wobei der Achsschenkelbolzen (2) ein Achsenelement umfasst, das in der Achse (1) aufgepresst ist und in dem die Hydraulikleitungen eingerichtet sind, wobei das Achsenelement Umfangsnuten umfasst, die mit den Leitungen verbunden sind, die in diesem Achsenelement eingerichtet sind, derart, dass diese Nuten sich in Fluidverbindung mit den Leitungen befinden, die in der Achse (1) und in dem Achsschenkel (3) eingerichtet sind.

6. Baugruppe nach Anspruch 5, wobei der Achsschenkelbolzen (2) mit mindestens zwei mechanischen Lagerzonen versehen ist, die ihn mit der Achse (1) verbinden, wobei jede der mechanischen Lagerzonen durch Dichtungselemente eingerahmt ist, die Nuten umfassen, die in dem Achsschenkelbolzen (2) oder in der Achse (1) eingerichtet sind, in denen die Dichtungen angeordnet sind.

7. Baugruppe nach Anspruch 6, wobei mindestens eine der Lagerzonen mittels Hydrauliköl geschmiert ist, wobei die Lagerzone mittels einer Leckageleitung mit einer Hydraulikleitung verbunden ist, die in der Achse (1), dem Achsschenkel (3) oder dem Achsschenkelbolzen (2) eingerichtet ist, derart, dass die Versorgung der Lagerzone mit Hydrauliköl gewährleistet ist.

8. Baugruppe nach einem der Ansprüche 1 bis 7, wobei die Leitungen, die in der Achse (1) eingerichtet sind, von der Achse (1) auf Flächen münden, die Schlauchbefestigungsmittel umfassen, um sie mit den Leitungen zu verbinden, die in der Achse (1) eingerichtet sind.

9. Baugruppe nach einem der Ansprüche 1 bis 8, die ferner eine Abdeckung (4) umfasst, die auf dem Achsschenkel (3) befestigt ist und drehbar um den Achsschenkelbolzen (2) gelagert ist, wobei die Abdeckung (4) Leitungen umfasst, die angepasst sind, um eine Fluidverbindung zwischen den Leitungen zu ermöglichen, die in dem Achsschenkelbolzen (2) und in dem Achsschenkel (3) eingerichtet sind.

10. Baugruppe nach Anspruch 9, wobei der Achsschenkelbolzen (2) mit mindestens zwei mechanischen Lagerzonen versehen ist, die ihn mit der Abdeckung (4) verbinden, wobei jede der mechanischen Lagerzonen durch Dichtungselemente eingerahmt ist, die Nuten umfassen, die in dem Achsschenkelbolzen (2) oder in der Abdeckung (4) eingerichtet sind, in denen Dichtungen angeordnet sind.

11. Baugruppe nach einem der Ansprüche 1 bis 8, wobei der Achsschenkelbolzen (2) fest auf dem Achsschenkel (3) angebracht ist, derart, dass das durch den Achsschenkelbolzen (2) und den Achsschenkel (3) gebildete System in Bezug zur Achse (1) drehbar gelagert ist.

12. Fahrzeug, das ein Leitrad, das an einer Baugruppe nach einem der Ansprüche 1 bis 11 angebracht ist, sowie Mittel zur Versorgung der Hydromotoren mit Hydraulikfluid umfasst, wobei die Fluidverbindung zwischen den Versorgungsmitteln und den Motoren mittels von Leitungen ausgeführt ist, die in der Achse (1), dem Achsschenkelbolzen (2) und dem Achsschenkel (3) eingerichtet sind.

## Claims

1. An assembly, comprising,
- an axle (1),
- a steering pivot (2) mounted on the axle (1),
- a wheel spindle (3) mounted on the pivot (2),
- a hydraulic motor and a wheel mounted on said spindle (3), so that the spindle (3) is pivotally mounted relative to the axle (1), the axle (1), the spindle (3) and the pivot (2) being provided with communicating hydraulic pipes for supplying the hydraulic motor with fluid, the hydraulic pipes being laid out in the axle (1), the pivot (2) and the spindle (3) so that the pivot (2) produces a rotating joint ensuring the fluidic connection of said pipes laid out in the axle (1), the pivot (2) and the spindle (3) upon pivoting the spindle (3) relative to the axle (1),
**characterized in that** the pivot (2) comprises a shaft member fitted into the axle (1), and in which said hydraulic pipes are laid out, the spindle (3) being pivotally mounted on the shaft member, the axle (1) and the spindle (3) each comprising grooves extending around said shaft member and respectively connected to the hydraulic pipes of the axle (1) and of the spindle (3) so as to thereby produce the rotating joint with the hydraulic pipes of the pivot (2).

2. The assembly according to claim 1, wherein the pipes laid out in the axle (1) correspond to a high pressure line and to a low pressure line connected to the hydraulic motor, each axle (1) and each spindle (3) thereby comprising two grooves for forming a fluidic connection between said pipes forming the high and low pressure lines of the axle (1), of the pivot (2) and of the spindle (3).

3. The assembly according to claim 2, wherein the axle (1) and the spindle (3) further comprise two leak grooves positioned on either side of said grooves, said leak grooves being connected to a drain line opening into a reservoir at ambient pressure and/or to a case pressure line of the hydraulic motor, and being adapted for collecting the leaks from the rotating joint.

4. The assembly according to one of claims 1 to 3, wherein said pipes are each surrounded by seal grooves provided with high pressure or low pressure sealing members.

5. The assembly according to one of claims 1 to 4, wherein the pivot (2) comprises a shaft member fitted into the axle (1) and in which said hydraulic pipes are laid out, said shaft member comprising peripheral grooves connected to the pipes laid out in this shaft member, so that these grooves are in fluidic communication with the pipes laid out in the axle (1) and in the spindle (3).

6. The assembly according to claim 5, wherein said pivot (2) is provided with at least two mechanical bearing areas connecting it to the axle (1), each of said mechanical bearing areas being surrounded by sealing members comprising grooves laid out in said pivot (2) or in said axle (1) in which seal gaskets are positioned.

7. The assembly according to claim 6, wherein at least one of said bearing areas is lubricated by means of a hydraulic oil, said bearing area being connected by means of a leak line to a hydraulic pipe laid out in the axle (1), the spindle (3) or the pivot (2) so as to ensure supply of hydraulic oil to said bearing area.

8. The assembly according to one of claims 1 to 7, wherein said pipes laid out in the axle (1) open from said axle (1) onto surfaces comprising means for attaching flexible hoses in order to connect them to said pipes laid out in the axle (1).

9. The assembly according to one of claims 1 to 8, further comprising a yoke (4) attached on said wheel spindle (3) and rotatably mounted around said pivot (2), said yoke (4) comprising pipes adapted for allowing fluidic connections between the pipes laid out in the pivot (2) and in the spindle (3).

10. The assembly according to claim 9, wherein said pivot (2) is provided with at least two mechanical bearing areas connecting it to the yoke (4), each of said mechanical bearing areas being surrounded by sealing members comprising grooves laid out in said pivot (2) or in said yoke (4) in which seal gaskets are positioned.

11. The assembly according to one of claims 1 to 8, wherein the pivot (2) is fixedly mounted on the spindle (3) so that the system formed by the pivot (2) and the spindle (3) is pivotally mounted relatively to the axle (1).

12. A vehicle comprising a steered wheel mounted on an assembly according to one of claims 1 to 11, as well as means for supplying the hydraulic motors with hydraulic fluid, the fluidic connection between said supply means and said motors being achieved by means of the pipes laid out in said axle (1), pivot (2) and spindle (3).
